Europäisches Patentamt

European Patent Office

Office européen des brevets

(11) Publication number: **0 656 616 A1**

# EUROPEAN PATENT APPLICATION

(21) Application number: **94119035.7**

(22) Date of filing: **02.12.94**

(51) Int. Cl.6: **G09G 5/18**

(30) Priority: **02.12.93 US 160633**

(43) Date of publication of application:
**07.06.95 Bulletin 95/23**

(84) Designated Contracting States:
**DE FR GB IT NL**

(71) Applicant: **TEXAS INSTRUMENTS
INCORPORATED
13500 North Central Expressway
Dallas
Texas 75265 (US)**

(72) Inventor: **Marshall, Stephen W.
1408 North Cheyenne Drive
Richardson, TX 75080 (US)**
Inventor: **Gove, Robert J.
1405 Scarborough Lane
Plano, TX 75075 (US)**

(74) Representative: **Schwepfinger, Karl-Heinz,
Dipl.-Ing.
Prinz & Partner,
Manzingerweg 7
D-81241 München (DE)**

(54) **Technique to increase the apparent dynamic range of a visual display.**

(57) A method of digital signal translation wherein the value of a data word **48** is dithered over time such that the average value of the data word **48** is a more accurate approximation of the desired value of than is possible with a single data word of the same resolution. Three non-exclusive embodiments are taught using multiple memory lookup tables **58** to perform the translation function.

In one embodiment a counter **60** is used to sequentially select lookup tables for each translation. A second embodiment uses a random means to select the current lookup table. A third embodiment applies temporal dithering to the technique of spatial dithering to dither super-pixels and increase the number of intensity levels a display is capable of displaying.

EP 0 656 616 A1

Rank Xerox (UK) Business Services
(3.10/3.09/3.3.4)

1. FIELD OF THE INVENTION

This invention relates to the field of digital display systems, more particularly to digital spatial light modulator (SLM) display systems.

2. BACKGROUND OF THE INVENTION

Digital display systems create visual images from quantized video data. Digital displays have many advantages when compared to the typical analog display which uses a cathode ray tube (CRT), including increased accuracy of image rendition and the prospect of low-cost high-definition implementation. However, without proper consideration for representation of the image's dynamic range, a digital system can induce new artifacts. Because the data in a digital system is quantized, the display has a finite number if intensity levels that can be displayed. Discrete intensity levels can detract from the overall image quality, causing visual artifacts such as false contouring. If the number of discrete levels is increased, the picture quality is increased and the effects of artifacts are decreased. As the number of discrete intensity levels grows, the cost of the system increases. Up to a point, this is due more to the increased throughput and frame storage memory required than to the increased accuracy of the sampling circuitry.

SUMMARY OF THE INVENTION

A method and system for digital signal translation is disclosed wherein the value of a data word is dithered over time such that the average value of the data word is an approximation of the desired value of the data word.

The invention provides for digital signal translation wherein the value of a data word is dithered over time such that the average value of said data word is an approximation of the desired value of said data word.

The invention further provides for increasing the apparent dynamic range of a display system comprising digitizing the video data for each pixel, translating said data and varying said translation operation over time such that the average translated data value is an approximation of the desired data value.

It is an advantage of this invention to reduce number of image data bits required to be acquired, processed, and displayed in order to produce an image. A reduction in the number of bits will lead to a reduction in the cost of an image display system. It is another advantage of this invention to provide an efficient method of digital signal translation that reduces quantization errors. It is a further advantage of this invention to provide for the linearization of a nonlinear video signal and the smooth translation of color and intensity data.

BRIEF DESCRIPTION OF THE DRAWINGS

Fig. 1     is a graph of a typical luminosity transfer function for a cathode ray tube, linear display device, such as a deformable mirror device, and a television broadcast.

FIG. 2     is a graph of the low luminance portion of a typical CRT transfer function plot showing quantization errors.

FIG. 3     is a schematic view of a typical digital display system.

FIG. 4     is a schematic view of a first embodiment of a data translation system.

FIG. 5     is a plot of four sample translation curves.

FIG. 6     is a plot of a typical composite translation curve.

FIG. 7     is a schematic view of a second embodiment of a data translation system.

FIG. 8     is a typical embodiment of a super-pixel lookup table from prior art.

FIG. 9     is a schematic view of a third embodiment of a data translation system.

FIG. 10    is one embodiment of a super-pixel lookup table according to the present invention.

DETAILED DESCRIPTION OF THE PREFERRED EMBODIMENTS

One way to increase the dynamic range of a digital display system is through temporal dithering. Temporal dithering involves altering a digital translation function over time and allowing the viewer's eye to integrate the dithered display. This may be done by using multiple signal translation tables to dither the quantization break points over time. The observer's eye integrates a series of display pictures to effectively create fractional LSB quantization levels. The result of the integration is effective increase in the dynamic range of the video signal.

Quantization errors may occur with displays that can produce only a limited number of colors or intensity levels. As a color image is displayed, gradual transitions in the original image must be mapped into a very limited number of transitions in the displayed image. The result will be much sharper transitions in the displayed image which may result in false contours. Temporal dithering may be used in this case to increase the number of intensity levels available for display.

Temporal dithering may be implemented in at least three forms, sequential, random, and spatial. These three forms all have advantages and disadvantages in their implementation. The simplest form is sequential and will be discussed first.

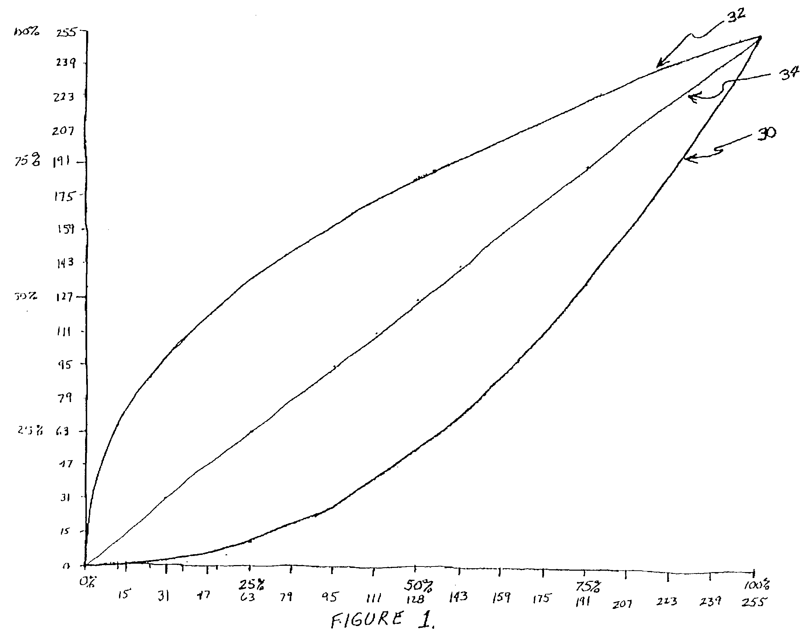

Sequential temporal dithering can be implemented, for example, in the transfer function translation for a deformable mirror device (DMD) based television. The standard display device in the television industry is the CRT which typically has a nonlinear luminance transfer function. When a display device, such as a DMD, with a different transfer function is used, the resulting brightness gradient, which has been designed for a CRT, does not accurately represent the brightness of the original scene. A signal translation, often called gamma correction, is performed to compensate for the difference in transfer functions. Figure 1 shows the luminance response functions of a CRT display 30, a television broadcast signal 32, and a linear display device 34. In Figure 1, the input signal is on the horizontal axis and the output signal is on the vertical axis. Each axis is labeled as a percentage of full scale and also as the decimal equivalent of an 8-bit binary number with 255 representing full scale. The CRT response function 30 is approximately equal to $Y = X^{2.2}$. The broadcast signal response function 32, is approximately equal to $Y = X^{1/2.2}$.

As can be seen in the broadcast signal response function 32 of Figure 1, for an input signal with low brightness, a given increase in the input signal will result in a large increase in the output signal. For a bright input signal, the same increase in the input signal will result in a smaller increase in the output signal. The broadcast signal response function is used to compensate for the use of CRTs which have a transfer function that is approximately the opposite of the broadcast transfer function.

Although analog video signals can be scaled to compensate for different transfer functions, the increase in Circuitry required is sometimes prohibitive. Digital video display systems can scale the digitized video signal, but scaling the video data also contributes to the display errors by adding scaling quantization errors. Scaling quantization errors are greatest with dimmer signals where a least significant bit (LSB) increase in the scaled digital signal represents an increase of several LSBs in the unscaled digitized video signal.

Quantization errors can result in very noticeable effects on the displayed image. As a very dim image increases in brightness, each LSB increase represents a large percentage increase in brightness. Because the eye can detect very small variations in brightness, a dim image may appear to have false contours caused by only a one or two LSB change in brightness. The linear light transfer function of the DMD implies doubling the brightness for a transition from an intensity value of one to an intensity value of two. This can lead to false contours in the dim portions of the scene for systems with low bit counts, for example systems with less than 9 bits of dynamic range.

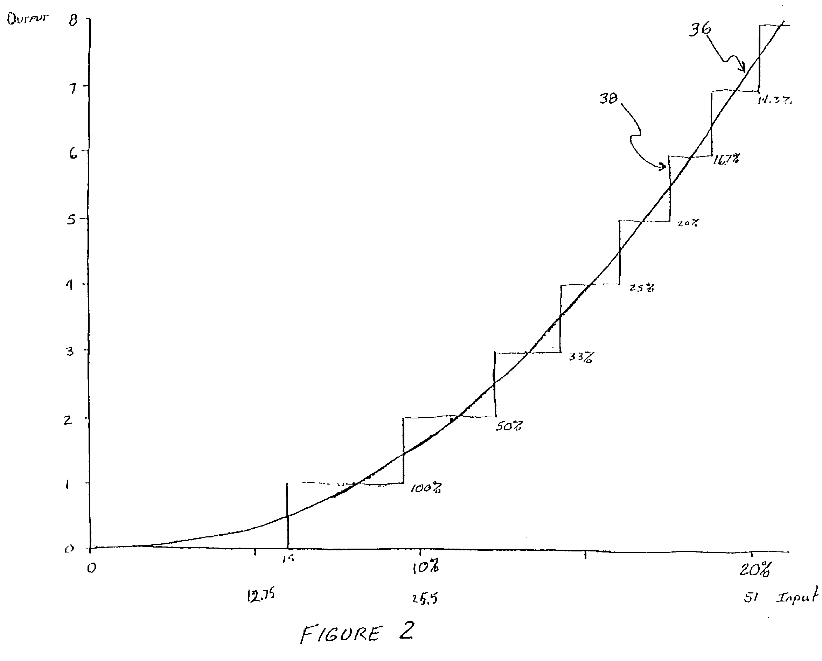

Figure 2 shows a portion of the ideal compensation curve 36, which is equal to the typical CRT transfer function. The actual compensation curve 38, is shown along with the percentage increase of each step. With an 8 bit data word, about 20% of the input range of the digitizer is used to generate only 8 LSBs of output data. In addition, each of the 8 binary, steps involves a large percentage increase in brightness. On the bright end of the curve the effect would be reversed with a small portion of the digitizer's range necessary to cause a large change in the compensated data.

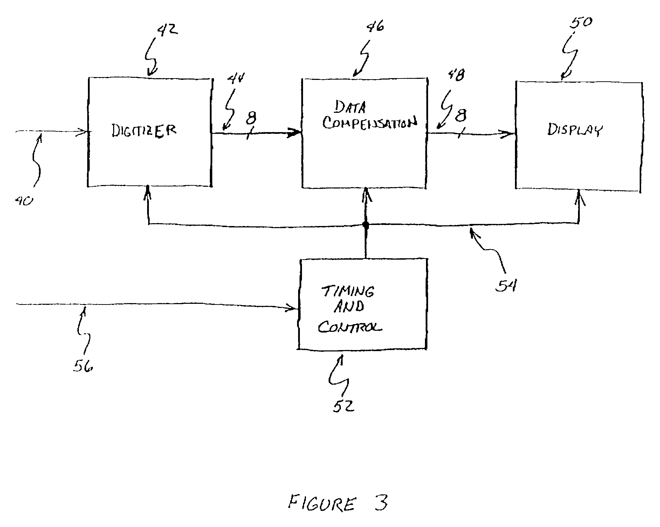

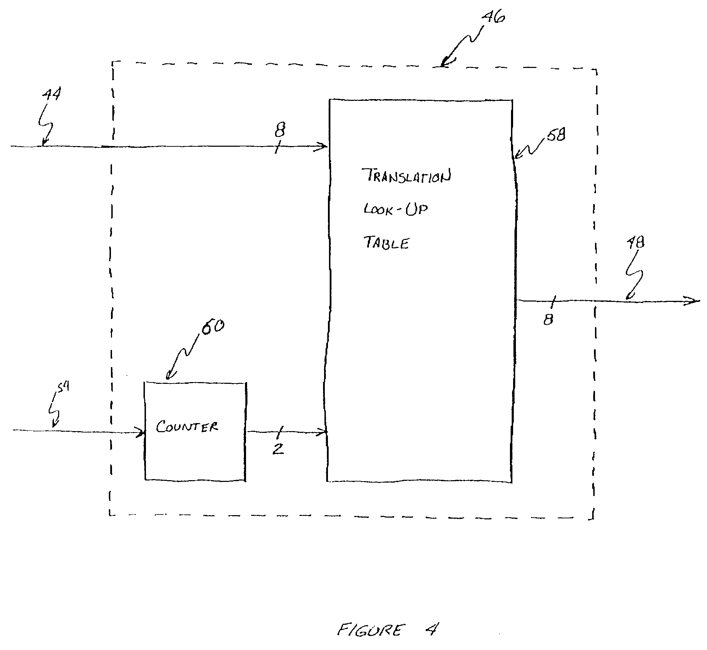

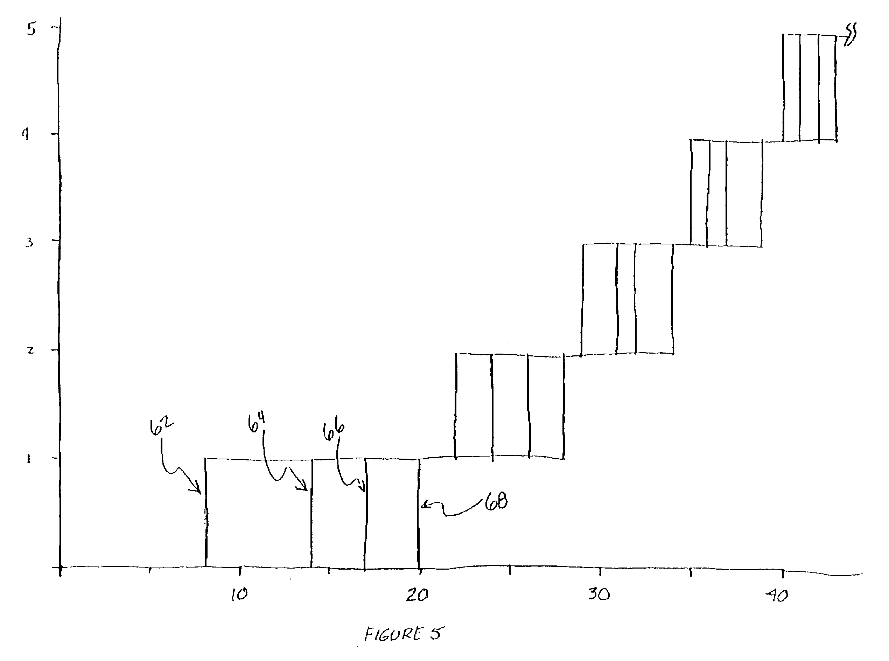

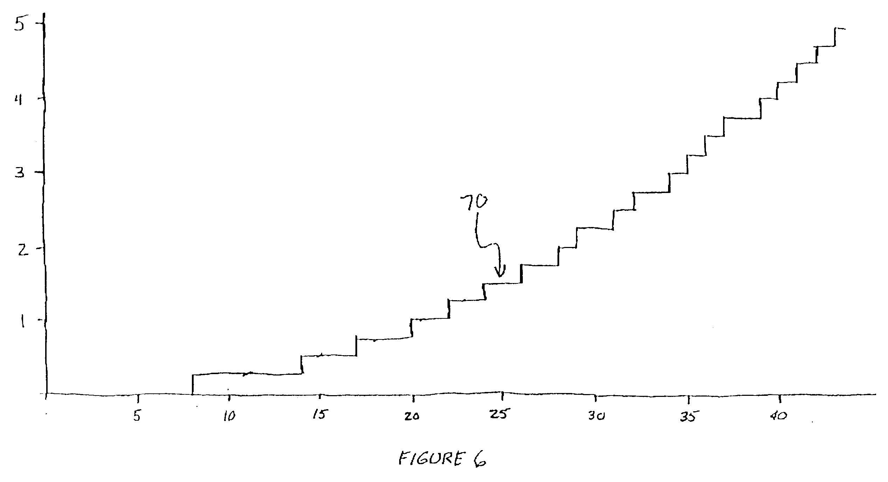

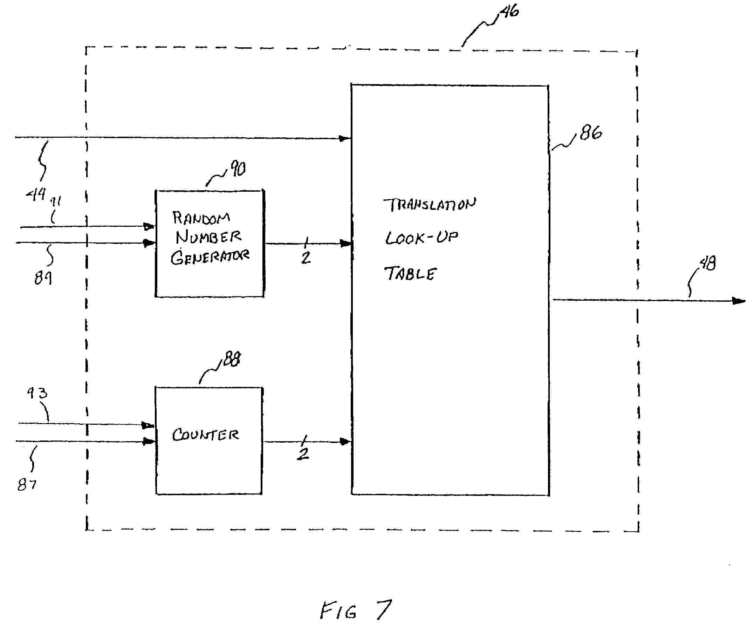

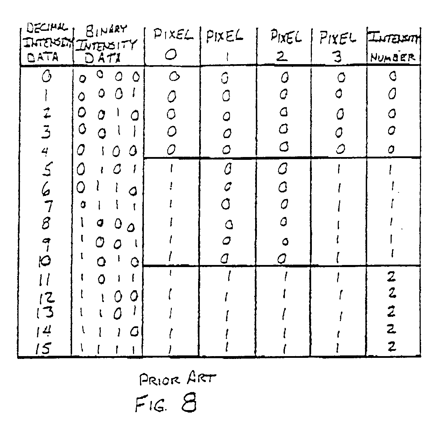

One embodiment of the present invention which improves display brightness compensation is shown in Figure 3. In Figure 3, the input analog video signal 40 is converted to an eight-bit digital signal 44 by digitizer 42. The choice of an eight-bit data word is for illustration purposes only, other embodiments may use more bits or fewer bits. The invention is not limited to the gamma correction of brightness data but could be used on any data where a data translation is necessary and the translated data can be averaged over time. Color display systems may handle each color separately either in parallel or sequentially.

Compensation circuit 46 translates the input video data 44 to the output video data 48 which, in this example, is another eight-bit data word that is transferred to the rest of the display system. For clarity, other functions of the display system such as buffers, frame memory, data formatters etc. are not shown. Such functions may be performed prior to, or after the data compensation. All functions are coordinated by the timing and control circuit 52. The timing and control circuit maintains synchronization with the video source through timing signals 56 which may be the horizontal and vertical synchronization signals from a NTSC composite video signal.

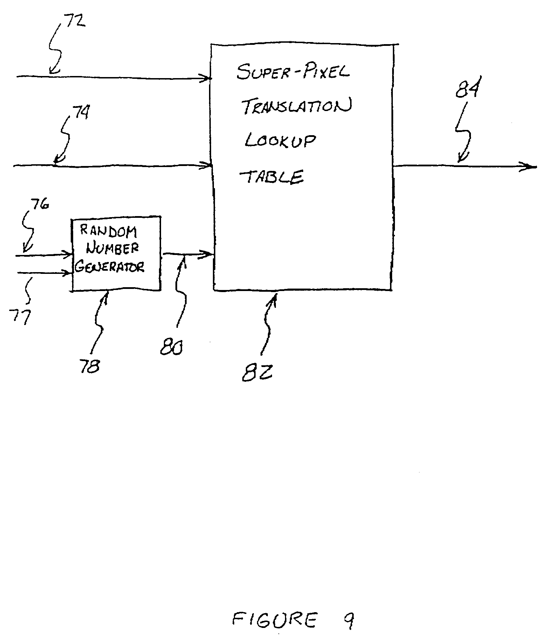

Figure 4 shows one embodiment of the temporal dithering data compensation circuit 46. In this embodiment the translation lookup table 58 could be a 1024x8 programmable read only memory (PROM). The translation lookup table contains four complete translation tables, each cable of mapping an input data value to an output data value. The input video data 44 is used as an offset address into the translation table to generate the output video data 48. Table selection is determined by the output of a sequencer. In this example the sequencer is a counter 60. The counter 60 can be clocked at either the frame, line, or pixel rate as determined by the timing and control signals 54 from the timing and control circuitry 52.

The four translation tables or curves comprising the translation lookup table 58 can each have independent curve breakpoints. Each curve is an approximation of the desired transfer function. If the curves are properly constructed, the average of the four curves will represent the desired transfer function more accurately than any of the individual curves. The use of four tables with properly chosen breakpoints would effectively add 2 bit of resolution to the display.

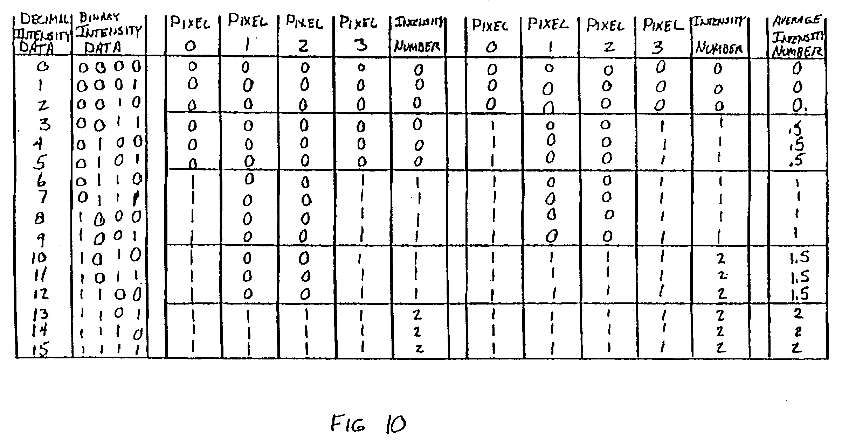

As data is displayed, each pixel in an image will use a different table from frame to frame. The different tables can cause the same input data for a given pixel to result in different output values, and therefore a different brightness, each frame. Figure 5 shows a portion of four sample curves. The viewer's eye integrates the brightness data from several frames. This has the effect of averaging the frames and effectively increases the dynamic range of the display. Figure 6 shows the average of the four curves from Figure 5. Table 1 shows a portion of four sample translation tables and the result of averaging.

In addition to increasing the apparent dynamic range of the display system, the averaging of several translation curves results in smoother transitions with very dim images. This smooth transition helps to reduce false contours in the resulting image. Note that this sequential method works best for still images. Sequential temporal dithering can cause artifacts, especially in moving images, related to the sequencing of the tables. However, due to the eye's loss of perceived resolution of images in motion, this method is still useful for images in motion.

## Table 1

| TABLE INPUT | DESIRED OUTPUT | TABLE 1 | TABLE 2 | TABLE 3 | TABLE 4 | AVERAGE OUTPUT |
|---|---|---|---|---|---|---|
| 0 | 0.00 | 0 | 0 | 0 | 0 | 0.00 |
| 1 | 0.00 | 0 | 0 | 0 | 0 | 0.00 |
| 2 | 0.01 | 0 | 0 | 0 | 0 | 0.00 |
| 3 | 0.01 | 0 | 0 | 0 | 0 | 0.00 |
| 4 | 0.03 | 0 | 0 | 0 | 0 | 0.00 |
| 5 | 0.04 | 0 | 0 | 0 | 0 | 0.00 |
| 6 | 0.07 | 0 | 0 | 0 | 0 | 0.00 |
| 7 | 0.09 | 0 | 0 | 0 | 0 | 0.00 |
| 8 | 0.13 | 1 | 0 | 0 | 0 | 0.25 |
| 9 | 0.16 | 1 | 0 | 0 | 0 | 0.25 |
| 10 | 0.21 | 1 | 0 | 0 | 0 | 0.25 |
| 11 | 0.25 | 1 | 0 | 0 | 0 | 0.25 |
| 12 | 0.31 | 1 | 0 | 0 | 0 | 0.25 |
| 13 | 0.37 | 1 | 0 | 0 | 0 | 0.25 |
| 14 | 0.43 | 1 | 0 | 1 | 0 | 0.50 |
| 15 | 0.50 | 1 | 0 | 1 | 0 | 0.50 |
| 16 | 0.58 | 1 | 0 | 1 | 0 | 0.50 |
| 17 | 0.66 | 1 | 1 | 1 | 0 | 0.75 |
| 18 | 0.75 | 1 | 1 | 1 | 0 | 0.75 |
| 19 | 0.84 | 1 | 1 | 1 | 0 | 0.75 |
| 20 | 0.94 | 1 | 1 | 1 | 1 | 1.00 |
| 21 | 1.05 | 1 | 1 | 1 | 1 | 1.00 |
| 22 | 1.16 | 2 | 1 | 1 | 1 | 1.25 |

| 23 | 1.28 | 2 | 1 | 1 | 1 | 1.25 |
| 24 | 1.41 | 2 | 1 | 2 | 1 | 1.50 |
| 25 | 1.54 | 2 | 1 | 2 | 1 | 1.50 |
| 26 | 1.68 | 2 | 2 | 2 | 1 | 1.75 |
| 27 | 1.82 | 2 | 2 | 2 | 1 | 1.75 |
| 28 | 1.98 | 2 | 2 | 2 | 2 | 2.00 |
| 29 | 2.14 | 3 | 2 | 2 | 2 | 2.25 |
| 30 | 2.30 | 3 | 2 | 2 | 2 | 2.25 |
| 31 | 2.47 | 3 | 2 | 3 | 2 | 2.50 |
| 32 | 2.65 | 3 | 3 | 3 | 2 | 2.75 |
| 33 | 2.84 | 3 | 3 | 3 | 2 | 2.75 |
| 34 | 3.03 | 3 | 3 | 3 | 3 | 3.00 |
| 35 | 3.23 | 4 | 3 | 3 | 3 | 3.25 |
| 36 | 3.44 | 4 | 3 | 4 | 3 | 3.50 |
| 37 | 3.65 | 4 | 4 | 4 | 3 | 3.75 |
| 38 | 3.87 | 4 | 4 | 4 | 3 | 3.75 |
| 39 | 4.10 | 4 | 4 | 4 | 4 | 4.00 |
| 40 | 4.33 | 5 | 4 | 4 | 4 | 4.25 |
| 41 | 4.57 | 5 | 4 | 5 | 4 | 4.50 |
| 42 | 4.82 | 5 | 5 | 5 | 4 | 4.75 |
| 43 | 5.08 | 5 | 5 | 5 | 5 | 5.00 |
| 44 | 5.34 | 6 | 5 | 5 | 5 | 5.25 |
| 45 | 5.61 | 6 | 5 | 6 | 5 | 5.50 |
| 46 | 5.89 | 6 | 6 | 6 | 6 | 6.00 |
| 47 | 6.18 | 7 | 6 | 6 | 6 | 6.25 |
| 48 | 6.47 | 7 | 6 | 7 | 6 | 6.50 |
| 49 | 6.77 | 7 | 7 | 7 | 6 | 6.75 |
| 50 | 7.08 | 7 | 7 | 7 | 7 | 7.00 |

A second embodiment of this invention involves the use of random temporal dithering. Random temporal dithering can be implemented simply by changing the counter 60 in Figure 4 to a random number generator. The random number generator can select translation tables at either the frame line, or pixel rate, but changing tables at the pixel rate is less likely to result in artifacts. Note that advanced implementations will switch between random and sequential dithering based on motion in the video. Motion information about an image may be available from progressive-scan conversion functions implemented earlier in the video pipeline. Although random temporal dithering can help to eliminate the artifacts caused by sequencing through the same tables in the same order, the same table could randomly be used over and over for the same portion of the display. This would eliminate the benefits of averaging and result in that portion of the display temporarily appearing to have the wrong intensity.

A hybrid embodiment involving the use of both sequential and random dithering is shown in Figure 7. In this embodiment both a counter and a random number generator are used. For the purposes of this example, translation look-up table 86 is assumed to contain sixteen individual look-up tables although any number could be used. These sixteen tables are divided into four blocks of four. A random number generator is used to select a block and the counter is used to sequentially select tables within that block. The counter and random number generator are clocked by clock signals 87 and 89. The counter and the random number generator could be clocked at the same rate, or the random number generator may be clocked at a slower rate, allowing the counter to sequence through of the tables in a block before the random number generator selects the next block. As was discussed above, in some situations it may be advantageous for control signals 91 and 93 to alter the dithering scheme, for example, when motion is detected in the scene. The control signals 91 and 93 could simply disable either the counter or random number generator, or both. An alternative embodiment could allow the control signals to select a different set of look-up tables from table 86. The control signals could be input directly to the look-up table 86. The number of blocks as well as the number of tables in each block could be greater than or less than the number in the above example.

Sequential and random temporal dithering have the advantage of increasing the dynamic range of a display without reducing spatial resolution. However, they may create artifacts when displaying a scene with motion. The third temporal dithering technique, spatial temporal dithering, reduces the effect of artifacts from a moving scene.

Spatial dithering is a technique to increase the number of effective intensity levels available. A paper discussing spatial dithering was presented to the Society of Photo-Optical Instrumentation Engineers by Dr. Robert Gove, who is one of the inventors of this invention. The paper, entitled "New dithering technique for realistic color image synthesis on binary-RGB displays" and printed in SPIE Vol. 638-Hybrid Image Processing 1986, is incorporated herein by reference.

Super-pixels are subarrays of pixels wherein each pixel may have a different intensity so that the super-pixel has an average intensity level that is not attainable by each pixel individually. Super-pixels may be any size subarray, such as 2x2 or 2x3, as long as the subarray is small enough to appear homogeneous to the eye. Spatial dithering involves displaying super-pixels of different intensities over time, which are averaged by the eye to effectively achieve a super-pixel with the correct intensity. The super-pixel created appears to be a blend of the intensities of the pixels contained in the super-pixel. To prevent visual artifacts, the super-pixels are usually constrained to only the combinations of pixels that are symmetric. For a display system with only two intensity levels using 2x2 super-pixels, there are three possible intensity levels using symmetric super-pixels.

To implement spatial dithering, intensity data for each pixel is translated to a display intensity depending on the position of a pixel within a super-pixel. Figure 8 is a table that helps to show the use of super-pixels for a four bit digitizer and two levels of intensity. The digital data and pixel number are used as indexes into the table to determine the intensity value used for the pixel. For example, if the digitized data for pixel 2 was binary 0101, then pixel 2 would have an intensity of 0. If pixel 3 had the same digitized data, it would have an intensity of 1. As can be seen from the column labeled 'Intensity Number', three super-pixel intensity levels are possible with this scheme.

Temporal dithering may be combined with the use of super-pixels to further increase the number of available intensity levels. Figure 9 shows a data translation system used to create and dither super-pixels. Intensity data 72, pixel number data 74, and random number data 80 are used to select and address a super-pixel translation lookup table 82 which generates display intensity data 84. Random number generator 78 may update the random number data 80 at any multiple of the pixel period as determined by timing signals 76. Random numbers are usually updated at the pixel rate but may be updated at a slower rate, including the line or frame rate, if desired. Control signal 77 is used to alter the dither operation depending on scene information, typically scene motion information as was discussed for Figure 7. A counter may be used in place of, or in addition to, the random number generator 78 shown in Figure 9.

Figure 10 shows a super-pixel lookup table that uses temporal dithering. Figure 10 includes the table from Figure 8 combined with a second table with different breakpoints. If the display system randomly selects each portion of the table half of the time, the viewer's eye will integrate the mixtures of the three super-pixel intensities to create five intensity levels. By using more tables, additional intensity levels could be created allowing a more accurate representation of the desired image.

The choice of four bits of video date, two intensity levels, and two lookup tables was for purposes of clarity. Any number of data bits, intensity levels, or lookup tables could be used. It is important for the display hardware be able to display the data from the tables rapidly enough to allow the user's eye to integrate the data and prevent the user from noticing excessive flicker as the tables are selected.

Whereas sequential and random temporal dithering had the possibility of introducing artifacts to moving images, spatial temporal dithering has the detrimental side effect of decreasing the effective resolution of the resulting display. Depending on the scene, dithering may not reduce resolution. Edges are preserved, however images with repetitive features, such as the image of a grating, cannot be fully reproduced at all intensity levels because of Nyquist cycles.

To use temporal dithering without risking the side effects, the dithering operations could be selectively implemented. For instance, a two dimensional filter operation could be performed on a frame of video data to map the bandwidth of the image. The resulting map could then be used to disable spatial dithering in the high bandwidth areas where artifacts would be likely. In the same manner, a frame of video data could be compared to the prior frame to determine what portions of the image are in motion. The motion data could then be used to disable sequential and random temporal dithering of areas that are showing motion.

Thus, although there has been described to this point a particular embodiment for a method and structure of increasing the apparent dynamic range of a display system through the use of temporal dithering, it is not intended that such specific references be considered as limitations upon the scope of this inventions except in-so-far as set forth in the following claims. Furthermore, having described the invention in connection with certain specific embodiments thereof, it is to be understood that further modifications may now suggest themselves to those skilled in the art, it is intended to cover all such modifications as fall within the scope of the appended claims.

## Claims

1. A method of increasing the apparent dynamic range of a display system, said method comprising:
addressing a memory with an input data word and a table select word, said memory producing an output data word; and
varying said table select word over an interval of time such that said output word varies over said interval, wherein an average value of said output word over said interval approximates a desired output data value.

2. The method of claim 1, wherein said output data word is a function of said input data word said function compensating for a non-linearity in said display system.

3. The method of claim 1 or claim 2, wherein said table select word may assume one of four values.

4. The method of any preceding claim, wherein said table select word is varied for each input data word.

5. The method of claim 2, wherein said input data word is a portion of an input data stream, said input data stream representing a video scene, the method further comprising:
detecting the amount of motion in said video scene, wherein said table select word is varied at a rate dependent on the motion detected in said video scene.

6. The method of any preceding claim, wherein said input data word represents the brightness data of a video image.

7. The method of any preceding claim, wherein said input data word represents the color data of a video image.

8. The method of any preceding claim, wherein said table select word selects one of four translation lookup tables, said table select word is chosen randomly for each input data word.

9. The method of any preceding claim, wherein said input data word represents one pixel in a video image, wherein said table select word is dependent on the position of said pixel in said video image.

10. A digital data translation system comprising;
a memory comprising at least two lookup tables, each of said lookup tables capable of producing an output data word in response to an input data word, wherein said output data word is a function of said input data word; and
a sequencer for selecting one of said lookup tables, said sequencer changing the selection of said lookup tables to output a different output data word, wherein an average of all said output data words approximates a desired output data word value.

11. The system of claim 10, wherein said sequencer is a counter.

12. The system of claim 10, wherein said sequencer is a random number generator.

13. The system of claim 10, wherein said input data word is a portion of a video data stream comprised of sequential image frames, each image frame comprised of rows of pixels, wherein said sequencer selects a lookup table for each frame of video data.

14. The system of claim 10, wherein said input data word is a portion of a video data stream comprised of sequential image frames, each image frame comprised of rows of pixels, wherein said sequencer selects a lookup table for each line of video data.

**15.** The system of claim 10, wherein said input data word is a portion of a video data stream comprised of sequential image frames, each image frame comprised of rows of pixels, wherein said sequencer selects a lookup table for each pixel of video data.

**16.** The system of claim 10, wherein said input data word is a portion of a video data stream comprised of sequential image frames, each image frame comprised of rows of pixels, said at least two lookup tables comprising four memory lookup tables, wherein a translation lookup table is randomly selected by said sequencer for each input data word.

**17.** A digital data translation system comprising;

a means for converting an input data word to a first output data word, said first output data word having a value which approximates a desired output data value; and

a means for altering the conversion performed by said means for converting, such that said means for converting outputs additional output data words, said additional output data words also approximate said desired output data value, wherein an average value of said first output data word and said additional output data words approximates said desired output data value.

**18.** The system of claim 17, wherein said means for converting is a memory look-up table.

FIGURE 1.

FIGURE 2

FIGURE 3

FIGURE 4

FIGURE 5

FIGURE 6

FIG 7

| DECIMAL INTENSITY DATA | BINARY INTENSITY DATA | | | | PIXEL 0 | PIXEL 1 | PIXEL 2 | PIXEL 3 | INTENSITY NUMBER |
|---|---|---|---|---|---|---|---|---|---|
| 0 | 0 | 0 | 0 | 0 | 0 | 0 | 0 | 0 | 0 |
| 1 | 0 | 0 | 0 | 1 | 0 | 0 | 0 | 0 | 0 |
| 2 | 0 | 0 | 1 | 0 | 0 | 0 | 0 | 0 | 0 |
| 3 | 0 | 0 | 1 | 1 | 0 | 0 | 0 | 0 | 0 |
| 4 | 0 | 1 | 0 | 0 | 0 | 0 | 0 | 0 | 0 |
| 5 | 0 | 1 | 0 | 1 | 1 | 0 | 0 | 1 | 1 |
| 6 | 0 | 1 | 1 | 0 | 1 | 0 | 0 | 1 | 1 |
| 7 | 0 | 1 | 1 | 1 | 1 | 0 | 0 | 1 | 1 |
| 8 | 1 | 0 | 0 | 0 | 1 | 0 | 0 | 1 | 1 |
| 9 | 1 | 0 | 0 | 1 | 1 | 0 | 0 | 1 | 1 |
| 10 | 1 | 0 | 1 | 0 | 1 | 0 | 0 | 1 | 1 |
| 11 | 1 | 0 | 1 | 1 | 1 | 1 | 1 | 1 | 2 |
| 12 | 1 | 1 | 0 | 0 | 1 | 1 | 1 | 1 | 2 |
| 13 | 1 | 1 | 0 | 1 | 1 | 1 | 1 | 1 | 2 |
| 14 | 1 | 1 | 1 | 0 | 1 | 1 | 1 | 1 | 2 |
| 15 | 1 | 1 | 1 | 1 | 1 | 1 | 1 | 1 | 2 |

PRIOR ART

FIG. 8

FIGURE 9

| Decimal Intensity Data | Binary Intensity Data | Pixel 0 | Pixel 1 | Pixel 2 | Pixel 3 | Intensity Number | Pixel 0 | Pixel 1 | Pixel 2 | Pixel 3 | Intensity Number | Average Intensity Number |
|---|---|---|---|---|---|---|---|---|---|---|---|---|
| 0 | 0 0 0 0 | 0 | 0 | 0 | 0 | 0 | 0 | 0 | 0 | 0 | 0 | 0 |
| 1 | 0 0 0 1 | 0 | 0 | 0 | 0 | 0 | 0 | 0 | 0 | 0 | 0 | 0 |
| 2 | 0 0 1 0 | 0 | 0 | 0 | 0 | 0 | 0 | 0 | 0 | 0 | 0 | 0. |
| 3 | 0 0 1 1 | 0 | 0 | 0 | 0 | 0 | 1 | 0 | 0 | 1 | 1 | .5 |
| 4 | 0 1 0 0 | 0 | 0 | 0 | 0 | 0 | 1 | 0 | 0 | 1 | 1 | .5 |
| 5 | 0 1 0 1 | 0 | 0 | 0 | 0 | 0 | 1 | 0 | 0 | 1 | 1 | .5 |
| 6 | 0 1 1 0 | 1 | 0 | 0 | 1 | 1 | 1 | 0 | 0 | 1 | 1 | 1 |
| 7 | 0 1 1 1 | 1 | 0 | 0 | 1 | 1 | 1 | 0 | 0 | 1 | 1 | 1 |
| 8 | 1 0 0 0 | 1 | 0 | 0 | 1 | 1 | 1 | 0 | 0 | 1 | 1 | 1 |
| 9 | 1 0 0 1 | 1 | 0 | 0 | 1 | 1 | 1 | 0 | 0 | 1 | 1 | 1 |
| 10 | 1 0 1 0 | 1 | 0 | 0 | 1 | 1 | 1 | 1 | 1 | 1 | 2 | 1.5 |
| 11 | 1 0 1 1 | 1 | 0 | 0 | 1 | 1 | 1 | 1 | 1 | 1 | 2 | 1.5 |
| 12 | 1 1 0 0 | 1 | 0 | 0 | 1 | 1 | 1 | 1 | 1 | 1 | 2 | 1.5 |
| 13 | 1 1 0 1 | 1 | 1 | 1 | 1 | 2 | 1 | 1 | 1 | 1 | 2 | 2 |
| 14 | 1 1 1 0 | 1 | 1 | 1 | 1 | 2 | 1 | 1 | 1 | 1 | 2 | 2 |
| 15 | 1 1 1 1 | 1 | 1 | 1 | 1 | 2 | 1 | 1 | 1 | 1 | 2 | 2 |

FIG 10

## DOCUMENTS CONSIDERED TO BE RELEVANT

EP 94119035.7

| Category | Citation of document with indication, where appropriate, of relevant passages | Relevant to claim | CLASSIFICATION OF THE APPLICATION (Int. Cl. 6) |
|---|---|---|---|
| A | EP - A - 0 562 162 (HEWLETT-PACKARD) * Abstract * ---- | 1 | G 09 G 5/18 |
| | | | TECHNICAL FIELDS SEARCHED (Int. Cl. 6) |
| | | | G 02 B 26/00 G 09 G 5/00 |

The present search report has been drawn up for all claims

| Place of search | Date of completion of the search | Examiner |
|---|---|---|
| VIENNA | 28-02-1995 | KUNZE |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

        .......................................................................
& : member of the same patent family, corresponding
document

EPO FORM 1503 03.82 (P0401)